Europäisches Patentamt

European Patent Office

Office européen des brevets

(11) Veröffentlichungsnummer: **0 166 063**
A1

(12) **EUROPÄISCHE PATENTANMELDUNG**

(21) Anmeldenummer: **84810315.6**

(22) Anmeldetag: **27.06.84**

(51) Int. Cl.⁴: **G 01 G 19/00**

(43) Veröffentlichungstag der Anmeldung: **02.01.86**
**Patentblatt 86/1**

(71) Anmelder: **Wirth Gallo Patent AG,**
**Sonnenbergstrasse 55, CH-8032 Zürich (CH)**

(84) Benannte Vertragsstaaten: **DE**

(72) Erfinder: **Wirth, Johannes, Sonnenbergstrasse 55,**
**CH-8032 Zürich (CH)**

(54) **Transportable Waage.**

(57) Transportable Waage, insb. für sperrige Güter, bestehend aus zwei unabhängigen Wägeeinrichtungen (1) und einem mit ihnen verbundenen Auswertungs- und Anzeigegerät (3), welche zwei Wägeeinrichtungen (1) je eine stabile, rutschfähige Auflagefläche (11) und einen Belastungsbalken (9) aufweisen, der mit mindestens einem in der Wägeeinrichtung befestigten Lastaufnehmer verbunden ist, wobei die Breite des streifenförmigen Belastungsfeldes dieses Balkens wesentlich kleiner als diejenige der Auflagefläche (11) ist.

EP 0 166 063 A1

WIRTH GALLO PATENT AG          Zürich

---

## Transportable Waage

---

Die vorliegende Erfindung bezieht sich auf eine transportable Waage, insb. für sperrige Güter, bestehend aus zwei unabhängigen Wägeeinrichtungen und einem mit ihnen verbundenen Auswertungs- und Anzeigegerät.

Mit der Rationalisierung des Transportwesens industrieller Erzeugnisse, werden Güter mehr und mehr in selbsstragenden Transporteinheiten (Paletten, Kisten, Containers und anderen) gefasst, deren Handhabung leichter als für lose Pakete und Kisten ist. Trotzt der Bemühungen um deren Normalisierung sind diese Transporteinheiten - je nach dem vorgesehenen Zweck - in Bezug auf Lastfähigkeit und Abmessungen unterschiedlich.

Diese Transporteinheiten werden bei jedem Transport einige Male gewogen. Je nach Art des jeweiligen Betriebes (Lieferfirmaversand, Flughafen, u.s.w,), erfolgen diese Wägungen entweder über eine ortsfeste Transporstrasse oder an verschiedenen Stellen einer Lagehalle. In letzterem Falle sind transportable Waagen erwünscht. Eine solche Waage bzw. ihre einzelnen Komponenten sollen möglichst leicht sein.

Fall 146
Transportable Waage

Transportable Plattform-Waagen in leichter Bauweise sind bekannt, wobei ihr Eigengewicht von der Plattform stark beeinflusst wird. Es sind auch Waagen bzw. Wägeanlagen bekannt, die keine Plattform aufweisen. So z.B. Wägeanlagen für Flugzeuge (über ad hoc ausgebildete Belastungspunkte wie im Deutschen Patent 1.139.289) und Behälter (über deren Stützpunkte). Dabei besteht die Wägeanlage aus mehreren Wägeeinrichtungen mit punktförmigem Belastungsfeld, deren Messergebnisse, um das Gewicht der Last zu erhalten, summiert werden. Diese Anlagen können nicht für die Wägung sperriger Güter eingesetzt werden, da keine punktförmigen Stützpunkte dafür vorgesehen sind (eine Kiste würde unter dem Gewicht ihres Inhaltes brechen). Darüber hinaus wäre die präzise Aufbringung dieser Stützpunkte auf die verschiedenen Wägeeinrichtungen umständlicher als das Auflegen der Last auf eine klassische Plattform.

Ziel der vorliegenden Erfindung ist eine transportable Waage für sperriges Gut, die leicht ist und keine präzise Positionierung des aufzulegenden Gutes erfordert.

Erfindungsgemäss wird diese Aufgabe dadurch gelöst, dass die zwei Wägeeinrichtungen je eine stabile, rutschfähige Auflagefläche und ein streifenförmiges Belastungsfeld aufweisen, dessen Breite wesentlich kleiner als diejenige der Auflagefläche ist.

In der beiliegenden Zeichnung sind Ausführungsbeispiele des Erfindungsgegenstandes schematisch dargestellt.
Es zeigen:

Fig. 1    eine schaubildliche Ansicht eines Ausführungsbeispieles,
Fig. 2    einen Längsschnitt durch eine Wiegeeinrichtung,
Fig. 3    einen Querschnitt durch eine Wiegeeinrichtung,
Fig. 4    einen Längsschnitt durch eine Variante zu Fig. 2,
Fig. 5    einen Querschnitt durch die Variante nach Fig. 4,
Fig. 6    eine weitere Variante der Anwendung der Waage nach Fig. 1.

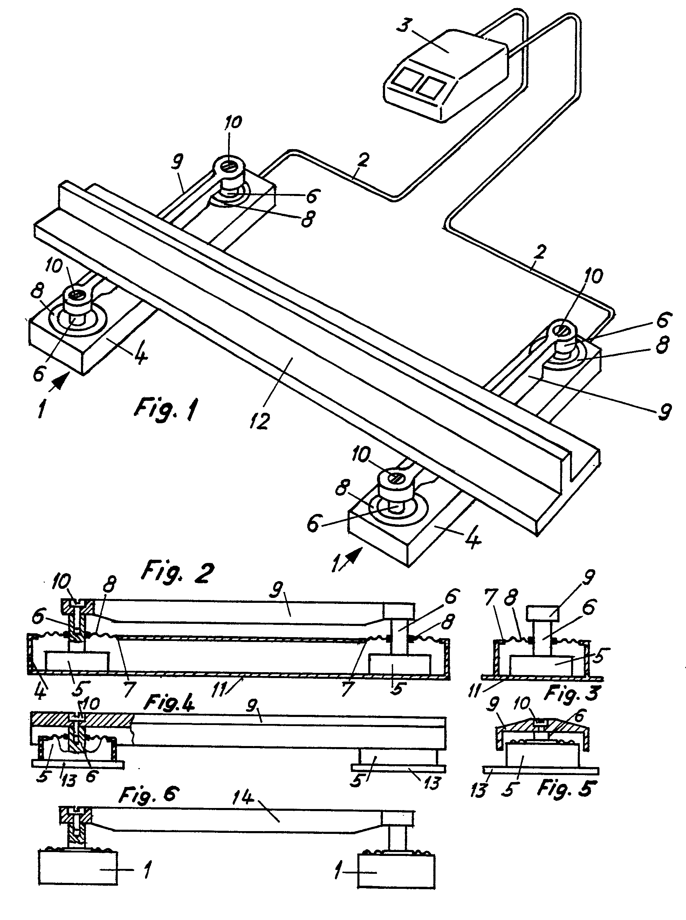

Die in Fig. 1-3 dargestellte Waage für sperriges Gut weist zwei voneinander unabhängige Wägeeinrichtungen 1 auf, die über je ein Kabel 2 mit einem Auswertungs- und Anzeigegerät 3 verbunden sind. Jede Wägeeinrichtung 1 besteht aus einem Gehäuse 4, in welchem zwei Lastaufnehmer 5 befestigt sind. An jedem Lastaufnehmer 5 ist ein senkrecht angeordneter Belastungsstab 6 angebracht. Diese Belastungsstäbe 6 erstrecken sich durch eine Oeffnung 7 des Gehäuses 4, die mittels einer elastischen, dichten Membrane 8 abgeschlossen sind. Beide Belastungsstäbe 6 einer Wägeeinrichtung 1 sind mittels eines Belastungsbalken 9 verbunden. Diese Belastungsbalken 9 sind mittels Schrauben 10 an den Belastungsstäben 6 befestigt. Die Auflagefläche 11 der Wägeeinrichtungen ist streifenförmig, d.h. länglich. Ihre Beschaffenheit ist derart, dass sie ein Rutschen der Wägeeinrichtung bei horizontal wirkenden Kräften, z.B. bei Schlägen, erlaubt. Der Belastungsbalken 9 ist derart bemessen, dass seine obere Fläche, d.h. sein Belastungsfeld 12 wesentlich schmaler als die Auflagefläche 11 ist.

Die beschriebene Waage wird wie folgt benützt. Das sperrige Gut, z.B. ein Stahlbalken 12, wird mittels eines Hubstaplers (nicht dargestellt) quer zu den annähern parallel angeordneten Wägeeinrichtungen 1. Diese Operation kann ohne jede Schwierigkeit ausgeführt werden, da die Wägeeinrichtungen 1 entsprechend den Bemessungen des sperrigen Gutes angeordnet werden können. Somit kann der für die Bewegungen des Hubstaplers notwendige Raum freigelassen werden. Ferner ist beim Auflegen des sperrigen Gutes keine genaue Positionierung auf der Waage notwendig. Werden beim Auflegen der Last im wesentlichen horizontale Kräfte erzeugt, so werden sie von den senkrechten Seiten der Belastungsbalken 9 und der Gehäuse 4 aufgenommen. Das Verhältnis der Höhe zur Breite der Gehäuse 4 ist derart gewählt, dass bei übermässigen solchen Kräften, bei Schlägen, die Wägeeinrichtungen 1 auf den Boden rutschen aber nicht umkippen. Die im wesentlichen senkrecht wirkenden Kräfte wirken auf die horizontale obere Fläche, d.h. auf das Belastungsfeld der Belastungsbalken 9, sowie auf die obere, horizontale Fläche des Gehäuses 4. Dank der länglichen Form der Gehäuse 4 und der Belastungsbalken 9, verursachen solche Kräfte höchstens ein Rutschen aber kein Umkippen der Wägeeinrichtung 1.

Die Lastaufnehmer 5 können Kraftmesser nach dem Prinzip der Dehnungsstreifen oder Massen- und Kraftmesser nach dem Prinzip der schwingenden Saiten sein. In allen Fällen werden die aufgenommenen Lasten elektronisch dem Auswertungs- und Anzeigerät 3 über die
Kabel 2 zwecks Auswertung und Anzeige übermittelt.

An Stelle von zwei Lastaufnehmern 5 könnte ein aus zwei Hebeln
bestehendes Hebelwerk und ein einziger Lastaufnehmer vorgesehen
werden. Ferner könnten die beiden Wägeeinrichtungen an Stelle der
Kabel 2 als Uebertragungsmedien, drahtlos mit dem Auswertungs-
und Anzeigegerät z.B. mittels infraroten Sende- und Empfangszellen
mit breiter Strahlcharakteristik verbunden, ausgeführt werden.

Fig. 4, 5 zeigen eine Ausführungsvariante, bei welcher jede Wägeeinrichtung 1 aus zwei mittels eines Belastungsbalkens 9 verbundenen Lastaufnehmern 5 besteht, welche Lastaufnehmer 5 jeder auf
einem Sockel 13 befestigt ist. Somit hat jede Wägeeinrichtung 1
kein eigenes Gehäuse. Die zwei Sockel 13 bilden zusammen die Auflagefläche der Wägeeinrichtung. In diesem Falle weist der Belastungsblaken 9 einen nach unten gerichteten, C-förmigen Querschnitt
auf, wobei die schmale, obere Fläche dieses Profils das längliche
Belastungsfeld bildet. Diese Ausführung weist die gleichen Eigenschaften mit Bezug auf Umkippen und Ausrutschen wie für die Ausführung nach Fig. 1-3 beschrieben, auf.

Fig. 6 zeigt eine weitere Variante der Anwendung der beschriebenen
Waage bei sperrigen, jedoch nicht selbsttragenden Gütern, z.B.
bei grossen mit Fliessgut gefüllten Säcken. In diesem Falle werden auf den beiden Wägeeinrichtungen Leichtmetalltraversen 14
quer aufgelegt und das Wiegegut, nach Austarieren dieser Traversen,
auf dieselben gelegt. Auch bei solchen Anwendungen geht der Vorteil der leichten Transportierbarkeit der Waage nicht verloren,
da solche Traversen immer noch viel leichter sind als eine eigentliche Plattform es wäre.

0166063

- 1 -

PATENTANSPRUECHE

1) Transportable Waage, insb. für sperrige Güter, bestehend aus zwei unabhängigen Wägeeinrichtungen (1) und einem mit ihnen verbundenen Auswertungs- und Anzeigegerät (3), dadurch gekennzeichnet, dass die zwei Wägeeinrichtungen (1) je eine stabile, rutschfähige Auflagefläche (11) und ein streifenförmiges Belastungsfeld aufweisen, dessen Breite wesentlich kleiner als diejenige der Auflagefläche ist.

2) Transportable Waage nach Anspruch 1, dadurch gekennzeichnet, dass jede Wägeeinrichtung einen Belastungsbalken (9) aufweist, der mit mindestens einem in der Wägeeinrichtung befestigten Lastaufnehmer verbunden ist.

3) Transportable Waage nach Anspruch 2, dadurch gekennzeichnet, dass jeder Belastungsstab einen nach unten gerichteten, C-förmigen Querschnitt aufweist.

4) Transportable Waage nach Anspruch 2, dadurch gekennzeichnet, dass jede Wägeeinrichtung zwei in einem Gehäuse befestigten Lastaufnehmer aufweist.

5) Transportable Waage nach Anspruch 2, dadurch gekennzeichnet, dass jede Wägeeinrichtung zwei einzelne, je auf einem Sockel befestigte Lastaufnehmer aufweist.

6) Transportable Waage nach Anspruch 2, dadurch gekennzeichnet, dass auf den Belastungsstäben der beiden Wägeeinrichtungen Traversen quer angeordnet sind.

7) Transportable Waage nach Anspruch 1, dadurch gekennzeichnet, dass die Wägeeinrichtungen mit dem Auswertungs- und Anzeigegerät mittels Kabel verbunden sind.

8) Transportable Waage nach Anspruch 1, dadurch gekennzeichnet, dass die Wägeeinrichtungen mit dem Auswertungs- und Anzeigegerät drahtlos mittels Infrarotempfangs- und Sendezellen verbunden sind.

0166063

1/1

Fig. 1

Fig. 2

Fig. 3

Fig. 4

Fig. 5

Fig. 6

0166063

**Europäisches Patentamt**

## EUROPÄISCHER RECHERCHENBERICHT

Nummer der Anmeldung

EP 84 81 0315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 622 586 (ALKEM GmbH) * Ansprüche 1,2,6; Figur 3 * | 1,2,6 | G 01 G 19/00 |
| A | US-A-2 735 291 (QUINN) * Spalte 2, Zeilen 10-28; Anspruch 1; Figuren 1,2 * | 1,4,7 | |
| A | US-A-4 385 527 (RASKIN) * Zusammenfassung; Figuren 2,4 * | 1 | |
| A | US-A-3 063 576 (HOFMEISTER) * Figuren 3,4; Spalte 1, Zeile 68 - Spalte 2, Zeile 26 * | 3,4,7 | |
| A | FR-A-1 296 119 (SIEMAG GmbH) * Ansprüche 1,2 * | 8 | RECHERCHIERTE SACHGEBIETE (Int. Cl.4) |
| D,A | DE-C-1 139 289 (WIRTH) | | G 01 G |

Der vorliegende Recherchenbericht wurde für alle Patentansprüche erstellt.

| Recherchenort | Abschlußdatum der Recherche | Prüfer |
|---|---|---|
| DEN HAAG | 01-03-1985 | SCHWEITZER J.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPA Form 1503. 03 82